# EUROPEAN PATENT SPECIFICATION

(11) **EP 0 987 180 B1**
(45) Date of publication and mention of the grant of the patent: **11.12.2002**
(21) Application number: 99830538.7
(22) Date of filing: 27.08.1999
(51) Int. Cl.: B65B 57/14, B65G 43/08

(54) **A method of controlling the operation of a packaging line automatically**
Verfahren zur automatischen Steuerung des Betriebes einer Verpackungsstrasse
Procédé de contrôle automatique du fonctionnement d'une chaîne de conditionnement

(30) Priority: 31.08.1998 IT BO980507
(43) Date of publication of application: 22.03.2000
(73) Proprietor: G.D. S.p.A., 40133 Bologna (IT)
(72) Inventor: Draghetti, Fiorenzo, 40059 Medicina (Bologna) (IT)
(74) Representative: Pederzini, Paolo

(56) References cited:
- EP-A- 0 234 840
- US-A- 5 050 725

## Description

The present invention relates to a method of controlling the operation of a packaging line automatically.

In particular, the present invention relates to a method by which the operation of a packaging line comprising at least two manufacturing machines can be controlled automatically.

The method disclosed finds application to advantage in packaging lines for tobacco products, to which direct reference is made throughout the following specification albeit with no limitation in scope implied.

In the specification, more particularly, reference is made explicitly though by no means exclusively to a packaging line that comprises a machine for the fabrication of cigarette packets and a machine by which the packets are overwrapped, typically a cellophaner.

It is generally the case in conventional packaging lines that packets of cigarettes distanced from a packaging machine on a relative continuously driven outfeed conveyor will be taken up in succession at the end of the conveyor remote from the packaging machine and transferred onto the infeed conveyor of a cellophaner.

The packets of cigarettes are carried typically in random order along the packaging machine outfeed conveyor but must be supplied to the cellophaner at intervals timed exactly with the movements of the working parts of the latter machine; accordingly, during the passage from the outfeed to the infeed conveyor, the packets must be separated one from the next by a predetermined distance.

The step in question is accomplished conventionally by using a retarder device at first to decelerate the packets directed randomly along the outfeed conveyor and order them into a single column, each disposed in contact with the next, and thereafter taking up the advancing packets individually from the forwardmost end of the column and transferring them to the infeed conveyor of the cellophaner.

The steps of taking up and transferring the packets are brought about synchronously with the movements of the cellophaner cycle, through the agency of a relative pickup and transfer mechanism, whilst the rate at which the packets advance when subjected to the action of the retarder device, hence the linear velocity of the column, is governed automatically by a control device that will pilot the operation of the retarder device in such a way as to ensure a predetermined timing between the single packets and the pickup and transfer mechanism.

In particular, the aforementioned control device typically comprises a comparator by means of which to verify the match continuously between an actual timing signal produced by a barrier type photocell positioned beyond the retarder device relative to the conveying direction, of which the function is to monitor the passage of the packets advancing in ordered succession toward the pickup and transfer mechanism, and a reference timing signal produced by a generator associated with the drive motor of the pickup and transfer mechanism. The comparator generates an output signal that is proportional to the difference between the reference timing signal and the actual timing signal and used to pilot the operation of an actuator consisting in a stepper motor, coupled in its turn to a differential train through which the retarder device is also driven, likewise by the motor of the pickup and transfer mechanism. In response to the signal received from the comparator, the stepper motor will act on the differential to increase or decrease the velocity at which the packets are caused to proceed by the retarder device, neutralizing the output signal and restoring the correct timing.

Normally speaking, a conventional packaging line of the type outlined above will incorporate a control system whereby any conditions indicating abnormal operation of the line are managed automatically. In the particular instance of one such method embraced by the prior art, a stoppage affecting the packet manufacturing machine will trigger a simultaneous and substantially immediate immobilization of the various components making up the packaging line. More precisely, the entire line is immobilized by simultaneously shutting off the drive motor of the cellophaner, and the motor driving the pickup and transfer mechanism and the retarder device. In the event that the drive motor of the cellophaner and the motor driving the pickup and transfer mechanism and the retarder device are one and the same, the aforementioned simultaneous immobilization of the various components is achieved simply by stopping just the one motor.

This method of control represents the most simple solution for maintaining the aforementioned timing between the retarder device, pickup and transfer mechanism and cellophaner; nonetheless, it happens that cellophaners of conventional design tend to turn out a significant number of defective packets if stopped in the manner described above.

Once inside the cellophaner, in effect, each packet is enveloped in a sheet of clear polypropylene as the first step of the overwrapping operation, and thereupon subjected to a heat-sealing step whereby the overwrapping is stabilized in a closured and essentially hermetic configuration. In particular, on completion of the folding operations by which the clear polypropylene sheet is flattened against the two end faces (top and bottom) of the packet, the resulting end folds will consist in up to six overlapping thicknesses of the plastic material, which require a relatively long time to heat-seal together. To ensure that the operating speed of the cellophaner does not suffer, the step of securing the end folds of the packet is spread usually over a succession of cycles performed by the machine, or in practical terms distributed between a succession of heat-seal stations arranged in sequence along a heat-seal path and equipped each with a relative sealing element. One familiar method of performing the operation in question consists in advancing the packets along the path with the end faces offered to respective heat-seal belts extending mutually opposed and parallel along the selfsame path.

With this type of arrangement, and considering that the aforementioned heat-seal belts are typified by a comparatively high thermal inertia, it is clear that if a cellophaner operated utilizing the method in question happens to shut off for any reason, the end faces of the packets occupying the heat-seal path will inevitably be scorched.

It has been sought to remedy this kind of drawback by equipping the cellophaner with a safety device that will ensure the heat-seal belts are distanced from the end faces of the packets the instant that the machine is shut off. Such a solution has proved unsatisfactory however, by reason of the fact that the heat-seal belts tend to transmit an excessive amount of heat to the packets even when distanced from the end faces. Whilst the packets do indeed escape scorching in this instance, the overwrapping nonetheless suffers damage to a greater or lesser degree.

The object of the invention is to provide a method for controlling the operation of a packaging line automatically, such as will allow of overcoming the above noted problem associated with the prior art. The stated object is realized in the adoption of a method according to the invention for controlling the operation of a packaging line automatically, typically a line extending along a predetermined path through at least two manufacturing machines, which comprises the step of advancing a succession of articles along the path from a first of the two manufacturing machines to the second, incorporating the subsidiary steps of decelerating the articles along a predetermined stretch of the path in such a manner as to bring them into a continuous column caused to advance in close order between the two machines, picking up the articles singly and in succession from the forwardmost end of the column at an uplift station according to a selectively timed pickup cycle, and transferring the articles to the infeed of the second manufacturing machine, wherein the subsidiary steps of picking up and transferring the articles are effected by a pickup and transfer mechanism, and the subsidiary steps of decelerating and picking up and transferring the articles are timed selectively in relation to the operation of the second manufacturing machine,
characterized in that it comprises a succession of steps constituting a control sequence whereby in response to a break in the operation of the first manufacturing machine, the column of articles is brought to a halt at a given moment determined by the pickup cycle, having accumulated to a length matching a predetermined reference length, whilst the pickup and transfer mechanism continues to operate at least for a number of cycles sufficient to clear all the articles still advancing beyond the forwardmost end of the column.

The invention will now be described in detail, by way of example, with the aid of the accompanying drawings, in which:
- fig 1 illustrates a packaging line of which the operation is controlled by the method according to the invention, seen in a schematic plan view with certain parts omitted for clarity;
- fig 2 illustrates a detail of the line in fig 1, viewed in a schematic side elevation with certain parts omitted for clarity.

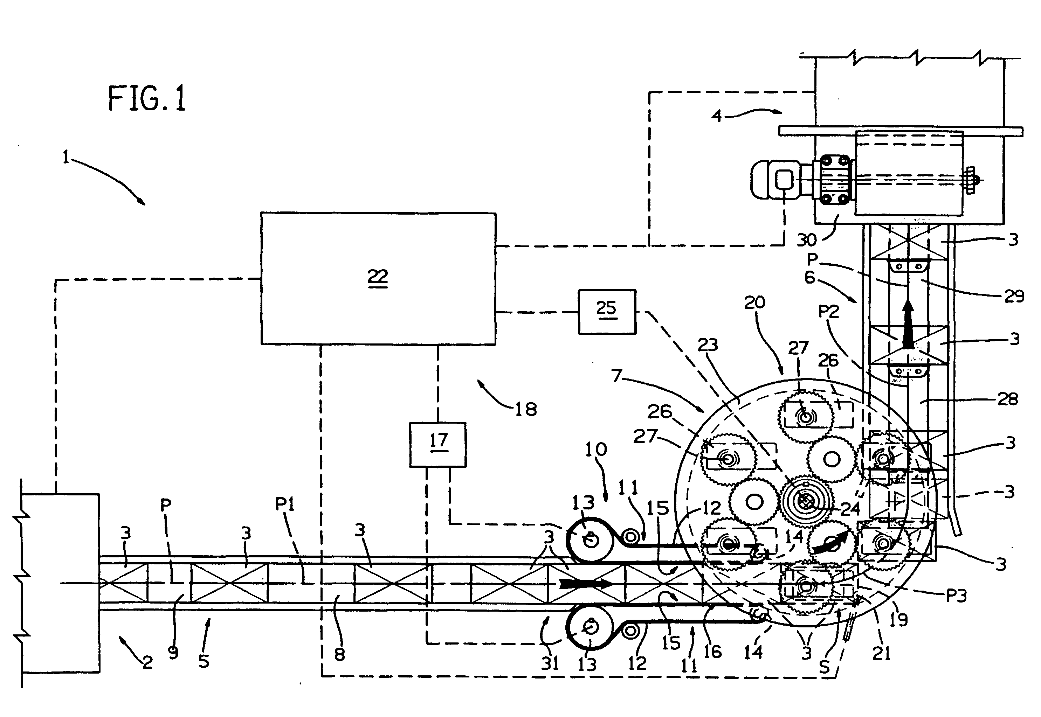

With reference to fig 1 of the drawings, 1 denotes a packaging line, in its entirety, extending along a substantially horizontal path, denoted P, first through a machine 2 for manufacturing packets 3 of cigarettes and thereafter through a cellophaner 4 by which the packets 3 are overwrapped.

In addition to the manufacturing machines 2 and 4 (both of which are indicated schematically, being conventional in embodiment), the line 1 is composed of an outfeed conveyor 5 associated with the first machine 2, an infeed conveyor 6 associated with the second machine 4, and, interposed between the two conveyors, a mechanism 7 by which packets 3 are picked up from the one conveyor 5 and transferred to the other conveyor 6. More particularly, the two conveyors 5 and 6 coincide with two corresponding rectilinear and mutually orthogonal stretches P1 and P2 of the horizontal path P, whilst the pickup and transfer mechanism 7 coincides with a curved stretch P3 of the path P interconnecting the two rectilinear stretches P1 and P2.

The outfeed conveyor 5 comprises a belt 8 looped over a live pulley and at least one return pulley, rotatable about respective horizontal axes, and affording a continuously driven conveying branch 9 uppermost by which packets 3 emerging singly from the first machine 2 are carried, longitudinally disposed, along the first stretch P1 of the path P toward the pickup and transfer mechanism 7. The end of the conveying branch 9 approaching the pickup and transfer mechanism 7 is flanked by a retarder device 10 positioned to interact with the packets 3 advancing along the first stretch P1 when the line is in operation.

The retarder device 10 consists in a pair of belt conveyors 11 extending laterally to and on opposite sides of the conveying branch 9, each one of which comprises a belt 12 looped around a live pulley 13 and a return pulley 14 with vertically disposed axes. The pulleys 13 and 14 are arranged in such a way that the belts 12 of the two conveyors 11 will afford two respective mutually opposed and parallel restraining branches 15 spaced apart by a distance substantially equal to a dimension of the single packet 3 measured transversely to the direction of movement along the first stretch P1 of the path P; the two branches 15 have a coefficient of friction higher than that of the conveying branch 9 afforded by the outfeed belt 8, and combine with this same branch 9 to create a conveying channel 16 by which the packets 3 are decelerated.

The live pulleys 13 are driven at identical and variable speed by a motor 17 functioning as the actuator of a master controller 18 that governs the operation of the line 1 overall and is programmed to regulate the linear velocity of the branches 15 automatically in response to the operating speed of the pickup and transfer mechanism 7.

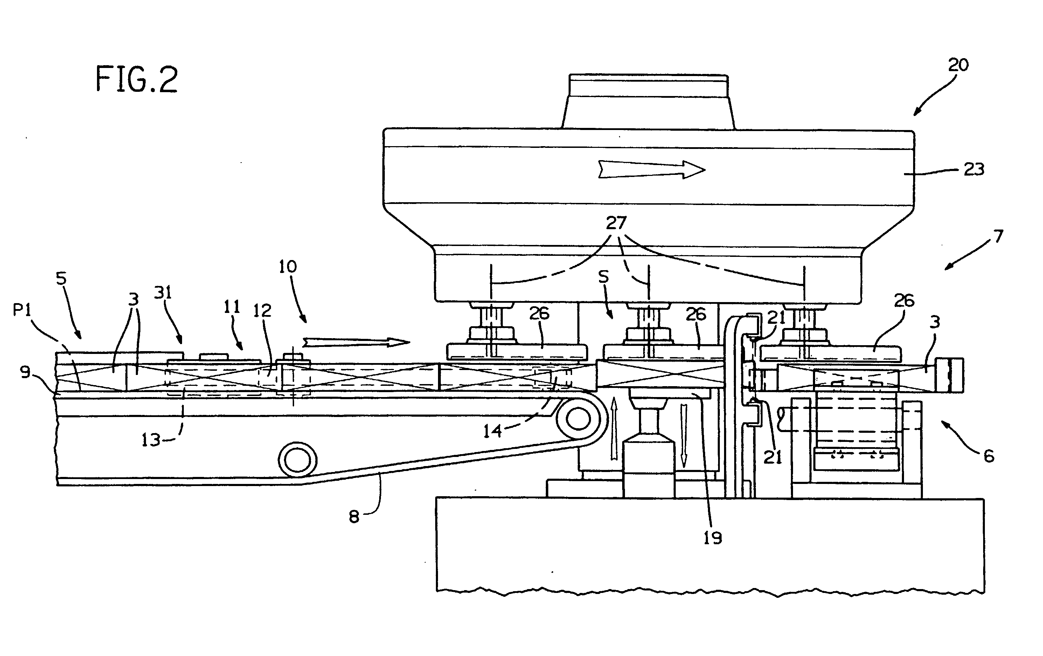

As illustrated to advantage in fig 2, the pickup and transfer mechanism 7 comprises an elevator 19 occupying an uplift station S located at the runout end of the outfeed conveyor 5; the elevator 19 is able to reciprocate vertically between a lowered position (not indicated), aligned horizontally with the conveying branch 9 in readiness to uplift a single packet 3, and a raised position in which the packet 3 is released to a rotary transfer head 20 likewise forming part of the pickup and transfer mechanism 7. The elevator 19 and transfer head 20 are synchronized in operation, the head 20 also being synchronized with the infeed conveyor 6 of the cellophaner 4. The components of the master controller 18 include a barrier photocell 21 placed immediately beyond the elevator 19, and a control unit 22 in receipt of signals indicating the status of the photocell 21 and the operating speed of the pickup and transfer mechanism 7, programmed on the basis of a conventional control logic to pilot the operation of the motor 17 in such a manner that the single packets 3 uplifted by the elevator 19 will be correctly positioned before being taken up by the head 20.

The transfer head 20 comprises a housing 23 keyed coaxially to the vertical output shaft 24 of a motor, denoted 25, by which the head is driven in rotation. The motor 25 causes the shaft 24 to turn continuously in a clockwise direction, as viewed in fig 1, and operates synchronously with a motor (not indicated) driving both the cellophaner 4 and the relative infeed conveyor 6. The same motor 25 will also serve to generate the reciprocating movement of the elevator 19, utilizing a conventional power take-off (not illustrated).

The head 20 also comprises a plurality of gripping and retaining elements 26 supported freely by the housing 23 and rotatable thus about respective vertical axes 27 equispaced around the shaft 24. Each element 26 consists in a rectangular plate with a plurality of suction holes (not illustrated) connected to a pneumatic circuit of conventional type (not illustrated), by which a single packet 3 can be picked up from the elevator 19 when the elevator is in the release position, and retained in such a way that it will be carried along the relative stretch P3 of the path P by the rotation of the housing 23.

Finally, the rotary transfer head 20 comprises an epicyclic train of gears (illustrated schematically in fig 1), located internally of the housing 23, by which the single elements 26 are made to describe a predetermined rotation about the relative axis 27 (in a clockwise direction as viewed in fig 1) while revolving with the housing 23, in such a way that the orientation of the element 26 remains unchanged throughout its passage along the curved stretch P3 of the path P.

The infeed conveyor 6 serving the cellophaner 4 comprises a conveyor belt 28 looped around a live pulley and least one return pulley rotatable about respective horizontal axes; the belt 28 affords a continuously driven conveying branch 29 uppermost by which the packets 3 are advanced broadside along the relative second stretch P2 of the path P toward a wrapping material infeed line 30 of conventional type forming part of the cellophaner 4.

The operation of the packaging line 1 will now be described, assuming the two machines 2 and 4 to be running normally, and starting from a configuration in which the conveyors 5 and 6 are in motion, the elevator 19 is aligned with the conveying branch 9 of the outfeed conveyor 5, the transfer head 20 is set in rotation and the packets 3 passing through the retarder device 10 are formed into a continuous column 31, advancing in direct contact one with the next and with one packet 3 at the forwardmost end of the column resting on the elevator 19.

In this situation the elevator 19 rises, offering the packet 3 to a respective gripping and retaining element 26 which will be advancing synchronously with the movement of the housing 23. More exactly, the packet 3 is caused to slide across the surface of the elevator 19 during this ascending movement, pushed forward by the column 31, until taken up by the respective gripping and retaining element 26. During the subsequent transfer of the packet 3 to the infeed conveyor 6, the elevator 19 returns to the lowered position of alignment with the outfeed conveying branch 9 before the next packet 3 in line has time to advance and strike against its lateral surface.

The control unit 22 is programmed to regulate the speed of the retarder belts 12 continuously in such a way as will ensure that each successive packet 3 directed onto the elevator 19 is taken up correctly (neither early nor late) by the next element 26 in sequence, which in the meantime will have reached the gripping position. In other words, the master controller 18 ensures that a predetermined timing is maintained between the retarder device 10 and the pickup and transfer mechanism 7.

It will be clear from the foregoing that the length of the column 31 is likely to vary during operation as the result of possible differences between the operating speeds of the two machines 2 and 4. These minor imbalances are monitored continuously (in a conventional manner, not illustrated) to the end of ensuring that the channel 16 remains fully occupied by the column 31 of packets 3 at any given moment. This is an essential condition, as there must be no gaps in the part of the column 31 advancing along the channel 16: in practice, any such break would occasion a loss of the timing between the retarder device 10 and the pickup and transfer mechanism 7. In addition to the function described above, the control unit 22 is programmed to perform a given sequence of emergency operations in the event of the machine being immobilized.

In effect, the master controller 18 is connected not only to the pickup and transfer mechanism 7 and to the retarder device 10, but also to the first and second manufacturing machines 2 and 4, and able selectively to shut off those parts of the line 1 located beyond the first machine 2 along the path P followed by the packets 3.

More precisely, on receipt of a signal indicating that the first machine 2 has ceased operation, the controller 18 will trigger a set sequence of steps of which the first is to measure the length of the column 31 by way of a relative sensor, conventional in embodiment and not illustrated; the measured or actual length is then compared with a predetermined reference length. Once the column 31 has reached a given length equal to the predetermined reference length, and at a moment determined by the uplift cycle of the elevator 19, the retarder device 10 is shut off and the column 31 brought to a standstill; the pickup and transfer mechanism 7 is kept running for the number of single cycles needed to clear the packets 3 lying beyond the forwardmost end of the column 31, and the second machine 4 continues to operate for the number of cycles needed to empty it of the packets 3 received following immobilization of the column 31. In other words, the pickup and transfer mechanism 7 continues operating until all the packets still in motion have been overwrapped, running idle for a period of time that lasts from the moment when the final packet 3 is transferred to the infeed conveyor 6 until the moment when the cellophaner 4 ultimately stops. The passage of the final packet 3 through the runout of the machine 4 is detected by a relative sensor (conventional in embodiment and not indicated) forming part of the control unit 22.

With the step of emptying the cellophaner 4 under way, the master controller 18 will also shut off the wrapping material infeed line 30 as the last remaining packet 3 on the conveyor 6 passes through and into the machine 4. Likewise in this instance, the passage of the final packet 3 through the wrapping material infeed line 30 is detected by a relative sensor (conventional in embodiment and not indicated) forming part of the control unit 22. As regards the operating cycle of the elevator 19, the column 31 is timed to come to a standstill in such a way that the elevator 19 will release the forwardmost packet 3 to the transfer head 20 and be prevented from taking up the next packet 3. Having thus picked up the final packet 3, accordingly, the elevator 19 continues to cycle passively until such time as the pickup and transfer mechanism 7 ceases operation.

In addition, the reference length will be greater than the length of the conveying channel 16 by a predetermined margin calculated so as to avoid the partial emptying of the channel 16 in the event of a stoppage affecting the upstream machine 2.

Lastly, to ensure that the forwardmost end of the column 31 can be adjusted for position following a pause and before the packaging line 1 is restarted, the motor 17 driving the pulleys 13 of the retarder belts 12 can be made to rotate in either direction by the control unit 22, so that the pulleys 13 in their turn can be rotated in the direction opposite to that of normal operation described previously. The angular distance completed in any such rotation is determined in familiar fashion by the control unit 22 on the basis of information received from an encoder of conventional type (not illustrated) coupled to the motor 17.

In the light of the foregoing, and in the spirit of the present invention, it will be appreciated that both the manufacturing machines and the pickup and transfer mechanism could be of a type different to the examples described above and illustrated in the accompanying drawings. In an alternative solution not illustrated, more particularly, the first of the two machines could be a cellophaner utilized to overwrap packets of cigarettes, and the second a cartoner, whilst the pickup and transfer mechanism could be a screw feeder type conveyor as disclosed in Italian Patent Application n° BO96A 000574.

## Claims

1. A method for controlling the operation of a packaging line automatically, said line extending along a predetermined path (P) through at least two manufacturing machines (2, 4), which comprises the step of advancing a succession of articles (3) along the path (P) from a first (2) of the two manufacturing machines to the second (4), incorporating the subsidiary steps of decelerating the articles (3) along a predetermined stretch (16) of the path (P) in such a manner as to bring them into a continuous column (31) caused to advance in close order between the two machines, picking up the articles (3) singly and in succession from the forwardmost end of the column (31) at an uplift station (S) according to a selectively timed pickup cycle, and transferring the articles (3) to the infeed (6) of the second manufacturing machine (4), wherein the subsidiary steps of picking up and transferring the articles are effected by a pickup and transfer mechanism (7) and the subsidiary steps of decelerating and picking up and transferring the articles are timed selectively in relation to the operation of the second manufacturing machine (4), **characterized**
**in that** it comprises a succession of steps constituting a control sequence whereby in response to a break in the operation of the first manufacturing machine (2), the column (31) of articles is brought to a halt at a given moment determined by the pickup cycle, having accumulated to a length matching a predetermined reference length, whilst the pickup and transfer mechanism (7) continues to operate at least for a number of cycles sufficient to clear all the articles (3) still advancing beyond the forwardmost end of the column (31).

2. A method as in claim 1, wherein the control sequence comprises the steps of keeping the second manufacturing machine (4) in operation at least for a number of cycles sufficient to empty the selfsame machine of all the articles (3) received following the immobilization of the column (31), and keeping the pickup and transfer mechanism (7) in operation until the second machine (4) shuts off.

3. A method as in claim 2, wherein the second manufacturing machine (4) is an overwrapping machine that includes a wrapping material infeed line (30), and the step of emptying the second manufacturing machine (4) is preceded by a step of immobilizing the infeed line (30).

4. A method as in preceding claims, wherein the control sequence comprises the step of adjusting the position in which the column (31) is brought to a halt.

## Patentansprüche

1. Verfahren zur automatischen Steuerung des Betriebes einer Verpackungsstrasse, wobei die genannte Strasse sich entlang einer bestimmten Bahn (P) und durch wenigstens zwei Fertigungsmaschinen (2, 4) erstreckt, welches die Phasen des aufeinanderfolgenden Vorlaufs von Gegenständen (3) entlang der Bahn (P) von einer ersten (2) der beiden Fertigungsmaschinen zu der zweiten (4) enthält, sowie enthaltend die Nebenphasen der Verlangsamung der Gegenstände (3) entlang einer bestimmten Strecke (16) der Bahn (P) auf solche Weise, dass diese zu einer kontinuierlichen Reihe (31) geformt werden, und die in geschlossener Anordnung zwischen den beiden Maschinen vorlaufen, des einzelnen und aufeinanderfolgenden Aufhehmens der Gegenstände (3) von dem vordersten Ende der Reihe (31) an einer Aufnahmestation (S) nach einem wahlweise getakteten Aufhahmezyklus, und der Übergabe der Gegenstände (3) an einen Eingang (6) der zweiten Fertigungsmaschine (4), bei welchem die Nebenphasen des Aufnehmens und der Übergabe der Gegenstände durch einen Aufnahme- und Übergabemechanismus (7) ausgeführt werden und die Nebenphasen der Verlangsamung sowie der Aufnahme und der Übergabe der Gegenstände wahlweise im Verhältnis zu dem Betrieb der zweiten Fertigungsmaschine (4) getaktet sind, **dadurch gekennzeichnet, dass** es eine Reihe von eine Steuerfolge bildende Phasen enthält, wodurch als Antwort auf eine Unterbrechung des Betriebes der ersten Fertigungsmaschine (2) die Reihe (31) von Gegenständen zum Anhalten gebracht wird, und zwar zu einem gewissen Moment, der durch den Aufhahmezyklus bestimmt wird, wobei eine Länge erreicht ist, die einer bestimmten Bezugslänge entspricht, während der Aufnahme- und Übergabemechanismus (7) wenigstens für eine bestimmte Zahl von Zyklen weiter arbeitet, die ausreichen, alle noch über das vorderste Ende der Reihe (31) hinaus vorlaufenden Gegenstände (3) zu entfernen.

2. Verfahren nach Patentanspruch 1, bei welchem die Steuerfolge die Phasen enthält, welche die zweite Fertigungsmaschine (4) wenigstens für eine Anzahl von Zyklen in Betrieb halten, die ausreichen, um die Maschine selbst von allen, infolge des Anhaltens der Reihe (31) erhaltenen Gegenständen (3) zu leeren, und welche den Aufnahme- und Übergabemechanismus (7) solange in Betrieb halten, bis die zweite Maschine (4) abgeschaltet ist.

3. Verfahren nach Patentanspruch 2, bei welchem die zweite Fertigungsmaschine (4) eine Umwickelmaschine ist, welche eine Zuführlinie (30) für Umwickelmaterial enthält, wobei der Phase des Leerens der zweiten Fertigungsmaschine (4) eine Phase des Anhaltens der Zuführlinie (30) vorausgeht.

4. Verfahren nach den vorstehenden Patentansprüchen, bei welchem die Steuerfolge die Phase der Regulierung der Position enthält, in welcher die Reihe (31) zum Anhalten gebracht wird.

## Revendications

1. Un procédé de contrôle automatique du fonctionnement d'une chaîne de conditionnement, ladite chaîne s'étendant le long d'un parcours (P) prédéterminé à travers au moins deux machines de fabrication (2, 4), ledit procédé comprenant la phase de faire avancer une succession d'articles (3) le long du parcours (P) depuis une première (2) des deux machines de fabrication jusqu'à la deuxième (4), et comprenant les phases auxiliaires suivantes : ralentir les articles (3) le long d'une section (16) prédéterminée du parcours (P) de manière à les mettre sur une file continue (31) qui avance en ordre rapproché entre les deux machines, prélever les articles (3) un par un et l'un après l'autre de la tête de la file (31) au niveau d'une station de prélèvement (S) selon un cycle de prélèvement synchronisé selon une relation de phase déterminée, et transférer les articles (3) jusqu'à l'entrée (6) de la deuxième machine de fabrication (4), où les phases auxiliaires de prélèvement et de transfert des articles sont effectuées par un mécanisme de prélèvement et de transfert (7) et les phases auxiliaires de ralentissement et de prélèvement et transfert des articles sont synchronisées selon une relation de phase déterminée en fonction du fonctionnement de la deuxième machine de fabrication (4), ledit procédé étant **caractérisé en ce qu'**il comprend une série de phases constituant une séquence de contrôle selon laquelle, suite à un arrêt de fonctionnement de la première machine de fabrication (2), la file (31). d'articles est immobilisée à un moment donné déterminé par le cycle de prélèvement, lorsqu'une longueur correspondant à une longueur de référence prédéterminée est atteinte, tandis que le mécanisme de prélèvement et de transfert (7) continue à fonctionner au moins pendant un nombre de cycles suffisants pour évacuer tous les articles (3) qui avancent encore au-delà de la tête de la file (31).

2. Un procédé selon la revendication 1, où la séquence de contrôle comprend la phase de maintenir en fonctionnement la deuxième machine de fabrication (4) au moins pendant un nombre de cycles suffisants pour vider cette même machine de tous les articles (3) reçus suite à l'immobilisation de la file (31), et la phase de maintenir en fonctionnement le mécanisme de prélèvement et de transfert (7) jusqu'à ce que la deuxième machine (4) s'arrête.

3. Un procédé selon la revendication 2, où la deuxième machine de fabrication (4) est une machine de suremballage qui comporte une ligne (30) d'alimentation en matériau d'emballage, et où la phase de vidage de la deuxième machine de fabrication (4) est précédée d'une phase d'immobilisation de cette même ligne d'alimentation (30).

4. Un procédé selon les revendications précédentes, où la séquence de contrôle comprend la phase de réglage de la position dans laquelle la file (31) doit s'immobiliser.
